# EUROPEAN PATENT SPECIFICATION

(11) **EP 3 098 350 B1**
(45) Date of publication and mention of the grant of the patent: **14.11.2018**
(21) Application number: 16171772.3
(22) Date of filing: 27.05.2016
(51) Int. Cl.: E01C 19/52, B25J 5/00

(54) **BRICK LAYING APPARATUS AND METHOD**
ZIEGELSTEINVERLEGEVORRICHTUNG UND -VERFAHREN
APPAREIL ET PROCÉDÉ DE POSE DE BRIQUES

(30) Priority: 27.05.2015 NL 2014866
(43) Date of publication of application: 30.11.2016
(73) Proprietor: De Krom Groep B.V., 4879 AC Etten-Leur (NL)
(72) Inventor: De Krom, Marinus Johannes Leonardus, 4711 VJ SINT WILLEBRORD (NL); De Krom, Johannes Marinus Leonardus, 4711 CC SINT WILLEBRORD (NL)
(74) Representative: Grootscholten, Johannes A.M.

(56) References cited:
- EP-A1- 2 157 259
- EP-A1- 2 312 055
- WO-A1-2007/102731

## Description

The present disclosure relates to a brick laying apparatus and an associated method.

To the best knowledge of the inventors of the present disclosure, no brick laying apparatus exists that may be capable of automatically or even autonomously laying bricks to pave a way, street, driveway, or similar surface with bricks. All known brick laying apparatuses require manual control.

The present disclosure is directed at providing an improved brick laying apparatus, which is enhanced to the extent that therewith automatic or even autonomous brick laying can be realized.

To this end, according to the present disclosure, a brick laying apparatus is provided, which is configured to pave a street, driveway, or similar surface with bricks, by comprising:
- a displaceable frame having a frame drive for displacement of the frame;
- a brick laying arm connected to the frame and having a gripper configured to engage bricks, having an arm drive to move the brick laying arm relative to the frame;
- a positioning sensor on the frame, configured to receive signals enabling determination of a position of the apparatus;
- a vision system on the frame configured to generate images of at least a partial surface area of the surface to be paved with bricks, at least within boundaries set in terms of or in relation to the position of the apparatus; and
- a control system configured to control the frame drive to displace the frame and the arm drive to move the brick laying arm, based on a surface area relative to the determined position of the frame and on the generated images.

Reference is made here to WO-2007/102731 as a prior art disclosure, relative to which the present disclosure is distinguished by at least the features in the characterising portions of the appended independent apparatus and method claims.

Namely, the brick laying apparatus further comprises at least one selectively extending lift foot, connected to the frame via a turntable, wherein the lift foot is configured to raise or lower the frame and to rotate the frame around the lift foot.

The brick laying apparatus may exhibit the further feature that the lift foot comprises at least two complementary feet parts, of which each comprises a foot element connected through a hinge to a downward oriented end of a selectively extendable and retractable leg.

Such a configuration allows the brick laying apparatus to exhibit improvements to the extent that the above objective may be achieved.

In a preferred embodiment the brick laying apparatus may be such that the positioning sensor is at least one of a GPS sensor; a GSM triangulation sensor; an earth magnetic field sensor.

In an alternative or additional embodiment the brick laying apparatus may be such that the vision system comprises at least one camera oriented towards at least a portion of the area of the surface.

In an alternative or additional embodiment the brick laying apparatus may be such that the frame is displaceable on a track.

In an alternative or additional embodiment the brick laying apparatus may be such that the frame is a portal frame having an overhead guide from which the brick laying arm with the arm drive is suspended.

In an alternative or additional embodiment the brick laying apparatus may be such that the frame comprises an accommodation for a carrier, such as a pallet, on which layers of bricks are initially arranged and provided to be engaged by the brick laying arm.

In an alternative or additional embodiment the brick laying apparatus may further comprise a pull device connected to the brick laying arm, to draw bricks engaged by the gripper against any one or more than one of the elements in a group, comprising: laid bricks in the surface to be paved with bricks; a road side shoulder; a sidewalk delimiting stone; and the like.

According to another aspect, the present disclosure relates to a method of paving a street, driveway, or similar surface with a layer of bricks, comprising:
- selectively displacing a displaceable frame using a frame drive;
- selectively laying bricks in or on the surface using a brick laying arm connected to the displaceable frame using a gripper configured to engage bricks and an arm drive to move the brick laying arm relative to the frame;
- determining of a position of the apparatus;
- generating images of at least a partial surface area of the surface to be paved with bricks, at least within boundaries set in terms of or in relation to the position of the apparatus; and
- controlling the frame drive to displace the frame and the arm drive to move the brick laying arm, based on a surface area relative to the determined position of the frame and on the generated images.

The method further comprises the novel features over WO-2007/102731 of lifting the frame on a selectively extendable foot, connected to the frame via a turntable, rotating the frame around the foot and lowering the frame thereafter to provide a turn in a displacement path of the frame. The method may further involve that the lift foot comprises at least two complementary feet parts, of which each comprises a foot element connected through a hinge to a downward oriented end of a selectively extendable and retractable leg and the method further comprises adapting the feet parts to a surface there underneath.

Embodiments of the present disclosure will be discussed herein below under reference to the accompanying drawing. These embodiments are exemplary and are intended only to clarify the width and breadth of the scope of protection of the present disclosure, as defined in the appended claims, and the scope of protection of the present disclosure encompasses alternatives for any component or element described herein below or feature defined in the appended claims from which it is evident that the exemplary embodiments are not to have any limiting effect on the scope of protection. Further, in the accompanying drawing and associated description below, the same or similar reference numbers may be employed for the same or similar aspects element, components or features of distinct embodiments, in as far as functionality thereof in the distinct embodiments is the same or similar. In the drawing:
Figure 1 shows a perspective view of a brick laying apparatus according to the present disclosure;
Figure 2 shows a perspective view in the direction of arrow II in figure 1;
Figure 3 shows a perspective view in the direction of arrow III in figure 2;
Figure 4 shows a perspective, exploded view of the brick laying apparatus according to figures 1-3;
Figure 5 shows a schematic view of a brick laying path followed by the brick laying apparatus in any embodiment thereof;
Figure 6 shows the brick laying apparatus in operation;
Figure 7 shows a detail from figure 6; and
Figures 8-11 show successive steps performed by the brick laying apparatus in any embodiment.

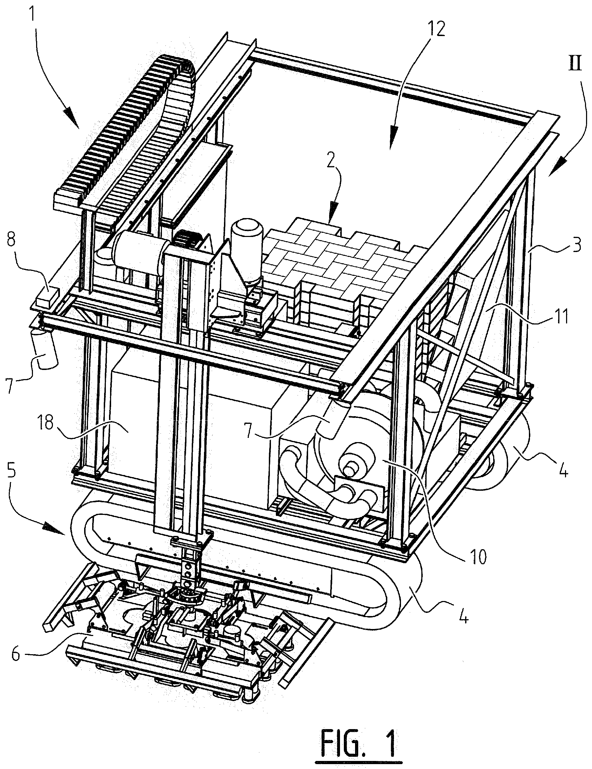

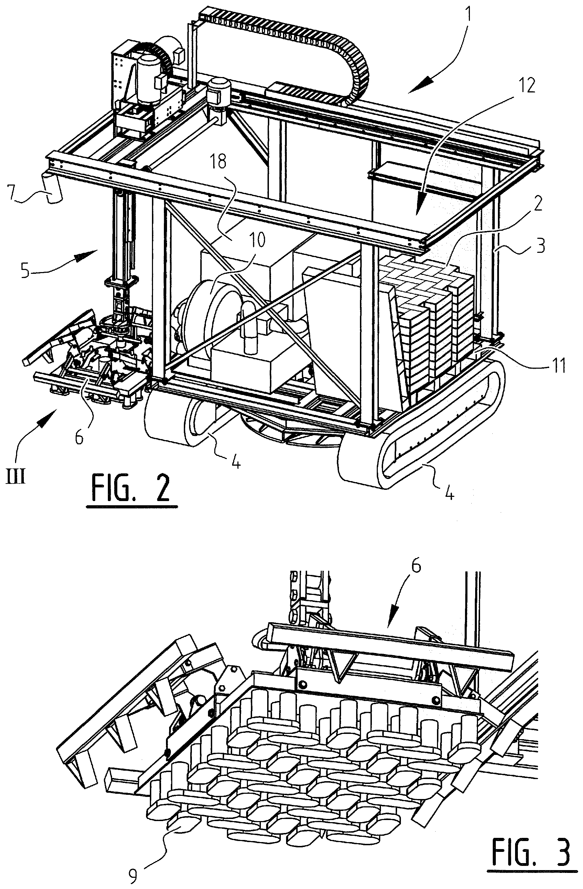

In figures 1-4, an embodiment of a brick laying apparatus 1 is shown. Brick laying apparatus 1 is configured to pave a street, driveway, or similar surface with bricks 2.

The brick laying apparatus comprises a displaceable frame 3, more in particular a portal frame 3, having a frame drive for displacement of the frame 3, and a set of tracks 4, which can be driven selectively for selective displacement of the apparatus 1. Attached to the frame 3 is a brick laying arm 5 having a gripper 6 configured to engage bricks 2, using vacuum or the like, and a pump 10 may be arranged on the frame 3 in order to generate the required under pressure in suction cups 9 to enable the gripper 6 to engage bricks 2.

The brick laying arm 5 has an arm drive to move the brick laying arm relative to the frame 3. More in particular, the gripper 6 can move up to collect and engage bricks 2 accommodated in the interior of the portal frame, can move down to deposit the engaged bricks 2 at a desired location, as will be set out in more detail herein below, and can move sideways back and forth under the top of the portal frame 3 between the accommodation for bricks 2 on the frame 3 and an extended position for brick laying next to one the tracks 4 or in front or at the rear of the frame 3.

On the portal frame 3, a positioning sensor 8 is arranged which is configured to receive signals enabling determination of a position of the apparatus. The positioning sensor 8 may be a GPS sensor, or alternatively a GSM triangulation sensor; an earth magnetic field sensor, or any other suitable sensor to determine a more or less global position of the apparatus 1. An area of interest or a surface area to be paved may be defined in terms of the position of the apparatus, or relative to the position of the apparatus 1. Such an area of interest may be input into the control in control cabinet 18 of the apparatus manually or using measurement results obtained with for example hand held positioning sensors. Alternatively, the apparatus may be made to drive along a boundary of the area of interest, to input data about the surface area to be paved. The control in control cabinet can then be used to determine a displacement path for the apparatus within such a boundary to enable the apparatus to practically automatically and possibly even autonomously go about the business of paving the surface area.

Arranged on the portal frame 3 are two cameras 7, oriented at a surface area where a surface is to be paved with bricks 2 to create a road or the like. A single camera 7 could suffice. Two cameras are employed to avoid that the gripper 6, an operator or a bystander may shield the area of interest. More than two cameras 7 could be employed. The cameras 7 are part of a vision system. Images are generated of at least a partial surface area of the surface to be paved with bricks 2. This enables the apparatus 1, and more in particular a control thereof, to control the frame drive to move the apparatus 1 and/or the arm drive to deposit bricks at a desired position, in relation to at least one of already laid bricks, curb stones, et cetera. The determined position of the apparatus and the information about the surface area to be paved or already paved, that can be derived from the generated images, can be beneficially employed to be steer the apparatus and/or the arm 5 thereof to deposit a set of bricks 2 at a time, which set of bricks 2 is then engaged by the gripper 6, at a desired location, i.e. a part of the surface area corresponding in size with the engaged set of bricks.

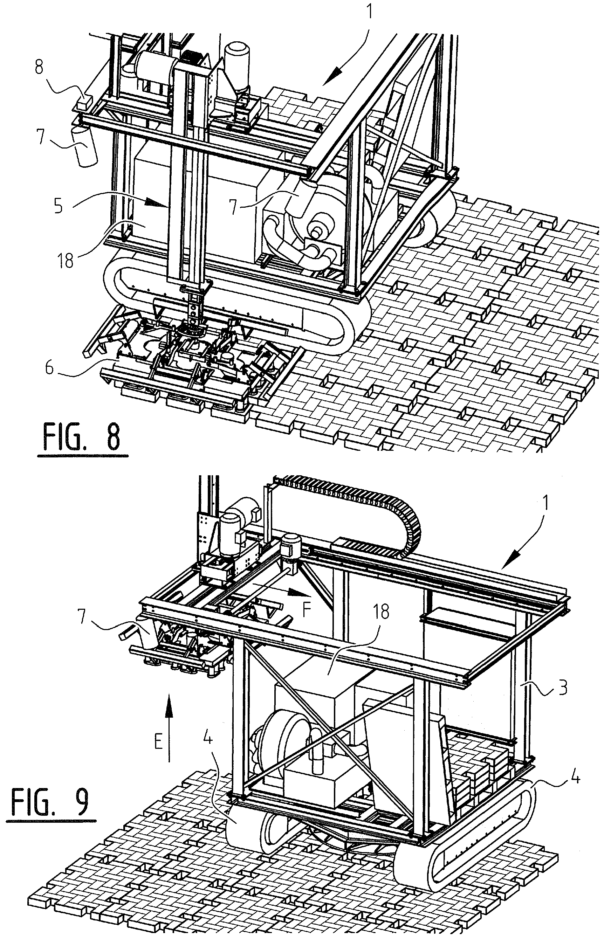

Bricks 2 are on a pallet 11 in an accommodation 12 on frame 3, and are stacked in sets of bricks 2, which are per layer of bricks in the stack on the pallet 11 arranged in a pattern, in which the bricks are also to be deposited in or on the surface area for paving, after transfer using the gripper 6. The area to be covered with one set or layer of bricks 2 corresponds with the gripper 6. Sequentially deposited sets of bricks 2 preferably closely abut. After laying a set of the bricks 2 as shown in figure 8, gripper 6 on brick laying arm 5 moves up from the surface to be paved in the direction of arrow E in figure 9 and back into the portal frame and to the accommodation 12 in the direction of arrow F in figure 9, to collect a further set of bricks comprising a layer of the stacked bricks 2 on pallet 11. The apparatus can be made to lay bricks with the tracks on laid bricks or in a sand bed. It is preferred that the apparatus functions from a surface of laid bricks, or the sand bed could be disturbed by the tracks 4.

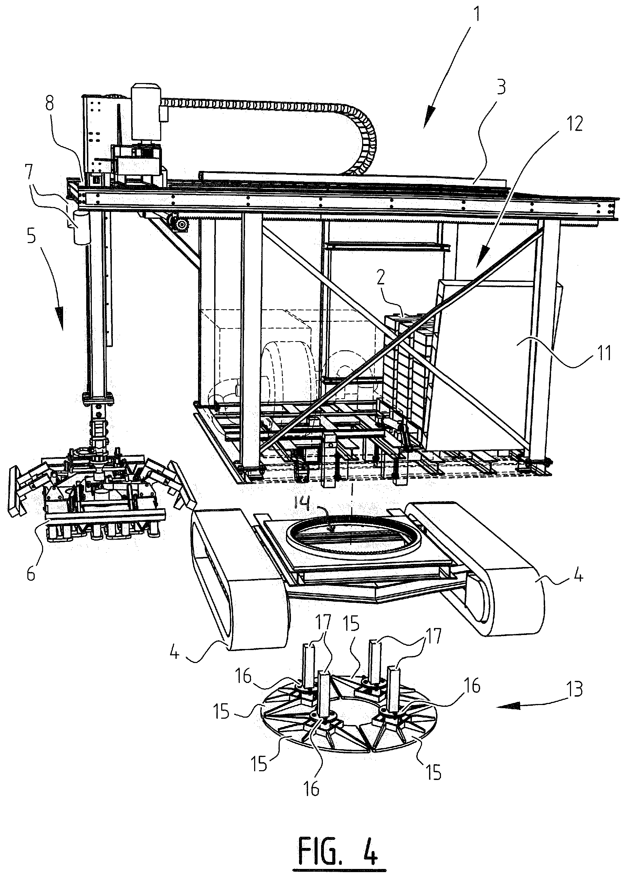

As shown in figure 4, a lift foot 13 is connected to the frame 3 via a turntable 14. The lift foot comprises four complementary feet parts, of which each comprises a foot element 15 connected through a hinge 16 to a downward oriented end of a selectively extendable and retractable leg 17. The hinges may be ball hinges, to accommodate any unevenness of the surface underneath the apparatus's tracks 4.

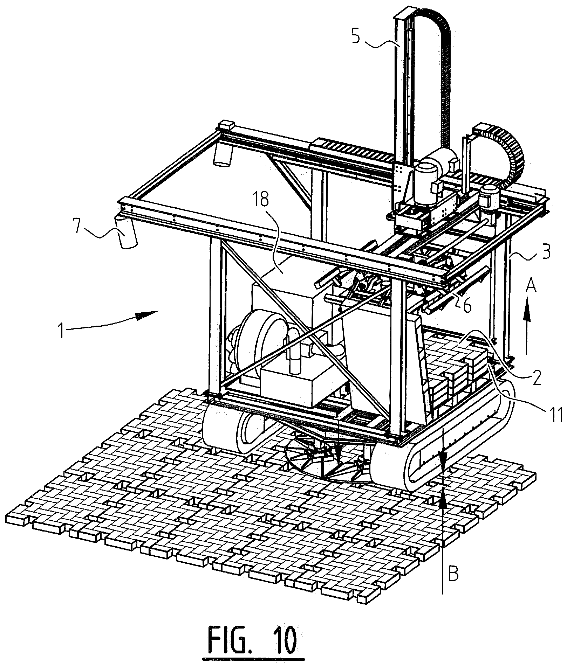

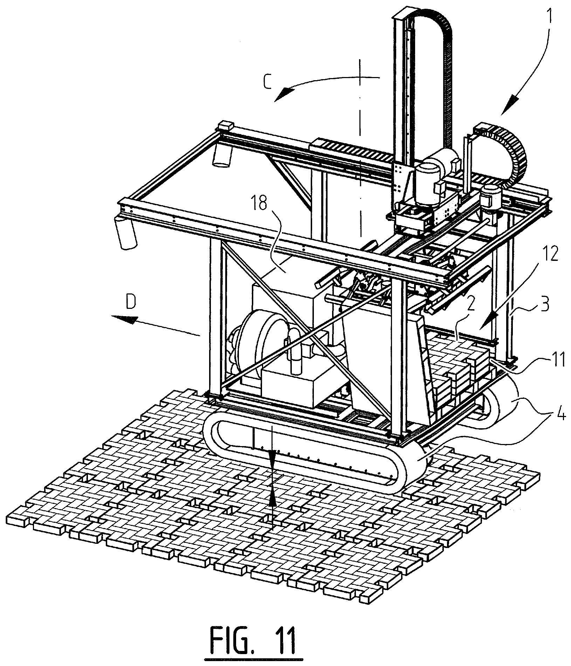

When the foot 13 is extended, which preferably is performed only after raising the gripper 6 as shown in figure 9 in the direction of arrow E, the entire apparatus is raised along arrow A in figure 10, with the tracks off the ground, as indicated with arrow B in figure 10. The portal frame 3 may then be rotated around the foot 13 in the direction of arrow C in figure 11, to thereafter be lowered and continue driving on tracks 4 in the direction of arrow D. This ensures that newly laid bricks are not pressed out of pattern, which could occur when the apparatus were to turn on tracks 4.

In figure 4 a cylinder 20 is shown. This cylinder 20 acts on empty pallets 11 to be swivelled away from the accommodation 12, after all layers of bricks are picked up therefrom by gripper 6. This allows the empty pallet 11 to be stored away from the accommodation 12, allow a new filled pallet 11 to be inserted onto the frame at accommodation 12, and for instance a fork lift truck used to bring the new filled pallet 11 may take care of removal of the empty pallet that is in figure 4 turned on a side.

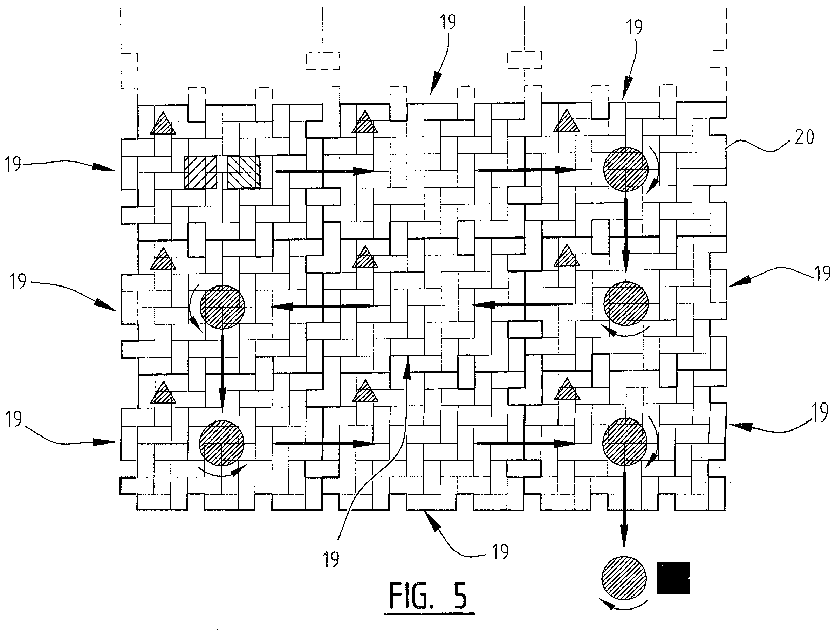

The representation of figure 5 shows a progression of laying sets 19 of bricks 2, each set 19 being formed by a layer of bricks in the stack on pallet 11 in accommodation 12. Schematically, movements of the apparatus 1 are shown using arrows for straight movements and turns, starting from the two squares in the tope left corner of figure 5, circles for locations where the foot 13 is lowered for a turn, and triangles for orientation on a previously laid set for placement of a currently deposited set.

A circumference or elongate boundary 20 for laying bricks may be determined on an initial position of the apparatus, or on a current position thereof, using position sensor 8. Precise placement of a new set of bricks for laying may then be determined based on information from images obtained with cameras 7.

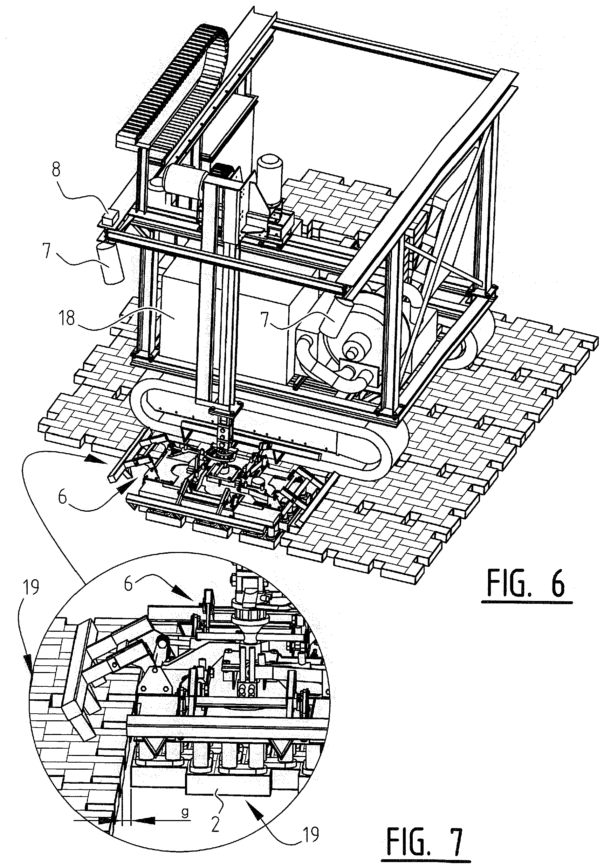

Figures 6 and 7 are provided to clarify that such placement has limitations. Based on the information from images obtained with the vision system, the gripper can be controlled to approximate a laid set 19 of bricks closely with a set of bricks to be laid, to within a short distance indicated with arrow G. The controller in control cabinet 18 may then be configured to manoeuver the apparatus or at least the brick laying arm 5 to push or pull horizontally the new set of bricks, until resistance against pushing or pulling horizontally reaches a level indicating close abutment. This may in principle be achieved already by only generating movement of the brick laying arm 5 in the configuration with the portal frame 3 (or in some other configuration) to move the gripper 6 with a stationary frame of the apparatus 1. A level of resistance against horizontal movement of at least the gripper 6 can be determined quite simply and elegantly using a spring in the configuration of the arm 5 and/or in the overhead roof of the portal frame in contact with the arm 5 and the gripper 6 thereof. Additionally or alternatively, a pull device may be provided connected to the brick laying arm, to push or draw bricks engaged by the gripper against any one or more than one of the elements in a group, comprising: laid bricks in the surface to be paved with bricks; a road side shoulder; a sidewalk delimiting stone; curb stones and the like. A power generator for such an additional drive part may monitor generated power to determine if the new set of bricks sufficiently closely abuts already laid bricks.

The scope of the present disclosure is by no means restricted to any embodiment or to any aspect, element or component of any such embodiment, as the scope of the disclosure is to be determined exclusively by the definitions in the appended claims, and may even include obvious alternatives for such embodiments, and/or aspects, elements or components of such embodiments.

## Claims

1. Brick laying apparatus, configured to pave a street, driveway, or similar surface with bricks, by comprising:
- a displaceable frame (3) having a frame drive for displacement of the frame;
- a brick laying arm (5) connected to the frame and having a gripper (6) configured to engage bricks, having an arm drive to move the brick laying arm relative to the frame;
- a positioning sensor (8) on the frame, configured to receive signals enabling determination of a position of the apparatus;
- a vision system (7) on the frame configured to generate images of at least a partial surface area of the surface to be paved with bricks, at least within boundaries set in terms of or in relation to the position of the apparatus; and
- a control system (18) configured to control the frame drive to displace the frame and the arm drive to move the brick laying arm, based on a surface area relative to the determined position of the frame and on the generated images,
**CHARACTERIZED BY**
at least one selectively extendable lift foot (13), connected to the frame (3) via a turntable (14), wherein the lift foot (13) is configured to raise or lower the frame and to rotate the frame around the lift foot (13).

2. Brick laying apparatus according to claim 1, wherein the lift foot (13) comprises at least two complementary feet parts (15-17), of which each comprises a foot element (15) connected through a hinge (16) to a downward oriented end of a selectively extendable and retractable leg (17).

3. Brick laying apparatus according to claim 1 or 2, wherein the positioning sensor (8) is at least one of a GPS sensor; a GSM triangulation sensor; an earth magnetic field sensor.

4. Brick laying apparatus according to claim 1, 2 or 3, wherein the vision system comprises at least one camera (7) oriented towards at least a portion of the area of the surface.

5. Brick laying apparatus according to any one or more than one preceding claim, wherein the frame (3) is displaceable on a track (4).

6. Brick laying apparatus according to any one or more than one preceding claim, wherein the frame is a portal frame (3) having an overhead guide from which the brick laying arm (5) with the arm drive is suspended.

7. Brick laying apparatus according to any one or more than one preceding claim, wherein the frame (3) comprises an accommodation (12) for a carrier, such as a pallet (11), on which layers of bricks are initially arranged and provided to be engaged by the brick laying arm (5).

8. Brick laying apparatus according to any one or more than one preceding claim, further comprising a pull device (18, 5) connected to the brick laying arm (5), to draw bricks engaged by the gripper (6) against any one or more than one of the elements in a group, comprising: laid bricks in the surface to be paved with bricks; a road side shoulder; a sidewalk delimiting stone; and the like.

9. Method of paving a street, driveway, or similar surface with a layer of bricks, comprising:
- selectively displacing a displaceable frame (3) using a frame drive;
- selectively laying bricks in or on the surface using a brick laying arm (5) connected to the displaceable frame (3) using a gripper (6) configured to engage bricks and an arm drive to move the brick laying arm relative to the frame;
- determining of a position of the apparatus;
- generating images of at least a partial surface area of the surface to be paved with bricks, at least within boundaries set in terms of or in relation to the position of the apparatus; and
- controlling the frame drive to displace the frame (3) and the arm drive to move the brick laying arm, arm (5), based on a surface area relative to the determined position of the frame (3) and on the generated images,
**CHARACTERIZED BY**
lifting the frame (3) on a selectively extendable foot (13), connected to the frame via a turntable (14), rotating the frame (3) around the foot (13) and lowering the frame (3) thereafter to provide a turn in a displacement path of the frame (3)·

10. Method according to claim 9, wherein the lift foot (13) comprises at least two complementary feet parts, of which each comprises a foot element connected through a hinge (16) to a downward oriented end of a selectively extendable and retractable leg (17) and the method further comprises adapting the feet parts to a surface there underneath.

11. Method according to claim 9 or 10, further comprising accommodating in or on the frame (3) a carrier, such as a pallet, on which layers of bricks are initially arranged and provided to be engaged by the brick laying arm.

12. Method according to claim 9, 10 or 11, further comprising selectively pulling the brick laying arm (5) to draw bricks engaged by the gripper (6) against any one or more than one of the elements in a group, comprising: laid bricks in the surface to be paved with bricks; a road side shoulder; a sidewalk delimiting stone.

## Patentansprüche

1. Ziegelsteinverlegevorrichtung, die aufgebaut ist, um eine Straße, einen Fußweg oder eine ähnliche Oberfläche mit Ziegelsteinen zu pflastern, indem sie aufweist:
- einen verschiebbaren Rahmen (3) mit einem Rahmenantrieb für die Verschiebung des Rahmens;
- einen Ziegelsteinverlegearm (5), der mit dem Rahmen verbunden ist und einen Greifer (6) hat, der aufgebaut ist, um an Ziegelsteinen anzugreifen, der einen Armantrieb hat, um den Ziegelsteinverlegearm relativ zu dem Rahmen zu bewegen;
- einn Positinierungssensor (8) auf dem Rahmen, der aufgebaut ist, um Signale zu empfangen, die die Bestimmung einer Position der Vorrichtung ermöglichen;
- ein Videosystem (7) auf dem Rahmen, das aufgebaut ist,um Bilder wenigstens eines Teiloberflächenbereichs der Oberfläche, die mit Ziegelsteinen gepflastert werden soll, wenigstens innnerhalb von Grenzen, die in Form der Position der Vorrichtung oder in Bezug auf diese festgelegt sind, zu erzeugen; und
- ein Steuersystem (18), das aufgebaut ist, um den Rahmenantrieb zu steuern, um den Rahmen und den Armantrieb zu verschieben, so dass sie den Ziegelsteinverlegearm basierend auf einem Oberflächenbereich relativ zu der bestimmten Position des Rahmens und auf den erzeugten Bildern bewegen,
gekennzeichnet duch
wenigstens einen selektiv ausdehnbaren Hebefuß (13), der über eine Drehscheibe (14) mit dem Rahmen (3) verbunden ist, wobei der Hebefuß (13) aufgebaut ist, um den Rahmen zu heben oder zu senken und um den Rahmen um den Hebefuß (13) herum zu drehen.

2. Ziegelsteinverlegevorrichtung nach Anspruch 1, wobei der Hebefuß (13) wenigstens zwei komplementäre Fußteile (15 - 17) aufweist, von denen jeder ein Fußelement (15) aufweist, das durch ein Gelenk (16) mit einem nach unten orientierten Ende eines selektiv ausfahrbaren und einziehbaren Beins (17) verbunden ist.

3. Ziegelsteinverlegevorrichtung nach Anspruch 1 oder 2, wobei der Positionierungssensor (8) ein GPS-Sensor und/oder ein GSM-Triangulationssensor und/oder ein Erdmagnetfeldsensor ist.

4. Ziegelsteinverlegevorrichtung nach Anspruch 1, 2 oder 3, wobei das Videosystem wenigstens eine Kamera (7) aufweist, die in Richtung wenigstens eines Abschnitts des Bereichs der Oberfläche orientiert ist.

5. Ziegelsteinverlegevorrichtung nach einem oder mehr als einem vorhergehenden Anspruch, wobei der Rahmen (3) auf einer Spur (4) verschiebbar ist.

6. Ziegelsteinverlegevorrichtung nach einem oder mehr als einem vorhergehenden Anspruch, wobei der Rahmen ein Portalrahmen (3) mit einer Überkopfführung ist, auf welcher der Ziegelsteinverlegearm (5) mit dem Armantrieb aufgehängt ist.

7. Ziegelsteinverlegevorrichtung nach einem oder mehr als einem vorhergehenden Anspruch, wobei der Rahmen (3) eine Aufnahme (12) für einen Träger, wie etwa eine Palette (11), aufweist, auf der Schichten von Ziegelsteinen ursprünglich angeordnet und bereitgestellt sind, damit sie dem Ziegelsteinverlegearm (5) gegriffen werden.

8. Ziegelsteinverlegevorrichtung nach einem oder mehr als einem vorhergehenden Anspruch, die ferner eine Zugvorrichtung (18, 5) aufweist, die mit dem Ziegelsteinverlegearm (5) verbunden ist, um Ziegelsteine, die von dem Greifer (6) gegriffen werden, gegen ein oder mehr als eines der Elemente in einer Gruppe zu ziehen, die aufweist: verlegte Ziegelsteine in der Oberfläche, die mit Ziegelsteinen gepflastert werden soll; einen straßenseitigen Seitentreifen; einen Gehsteigbegrenzungstein; und Ähnliche.

9. Verfahren zum Pflastern einer Straße, eines Fahrwegs oder einer ähnlichen Oberfläche mit einer Schicht aus Ziegelsteinen, das aufweist:
- selektives Verschieben eines verschiebbaren Rahmens (3) unter Verwendung eines Rahmenantriebs;
- selektives Verlegen von Ziegelsteinen auf der Oberfläche unter Verwendung eines Ziegelsteinverlegearms (5), der mit dem verschiebbaren Rahmen (3) verbunden ist, unter Verwendung eines Greifers (6), der aufgebaut ist, um Ziegelsteine zu greifen, und eines Armantriebs, um den Ziegelsteinverlegearm relativ zu dem Rahmen zu bewegen;
- Bestimmen einer Position der Vorrichtung;
- Erzeugen von Bildern wenigstens eines Teiloberflächenbereichs der Oberfläche, die mit Ziegelsteinen gepflastert werden soll, wenigstens innnerhalb von Grenzen, die in Form der Position der Vorrichtung oder in Bezug auf diese festgelegt sind; und
- Steuern des Rahmenantriebs, um den Rahmen und den Armantrieb zu verschieben, um den Ziegelsteinverlegearm (5) basierend auf einem Oberflächenbereich relativ zu der bestimmten Position des Rahmens (3) und auf den erzeugten Bildern bewegen, **gekennzeichnet durch**
Heben des Rahmens (3) auf einem selektiv ausfahrbaren Fuß (13), der über eine Drehscheibe (14) mit dem Rahmen (3) verbunden ist, wobei der Rahmen (3) um den Fuß (13) gedreht wird und der Rahmen danach gesenkt wird, um eine Drehung in einem Verschiebungsweg des Rahmens (3) bereitzustellen.

10. Verfahren nach Anspruch 9, wobei der Hebefuß (13) wenigtens zwei komplementäre Fußteile aufweist, von denen jeder ein Fußelement aufweist, das durch ein Gelenk (16) mit einem nach unten orientierten Ende eines selektiv ausfahrbaren und einziehbaren Beins (17) verbunden ist, und wobei das Verfahren ferner das Anpassen der Fußteile an eine Oberfläche unter ihnen aufweist.

11. Verfahren nach Anspruch 9 oder 10, das ferner das Aufnehmen eines Trägers in oder auf dem Rahmen (3), wie etwa einer Palette, auf der Schichten von Ziegelsteinen ursprünglich angeordnet sind und bereitgestellt sind, damit sie dem Ziegelsteinverlegearm gegriffen werden, aufweist.

12. Verfahren nach Anspruch 9, 10 oder 11, das ferner das selektive Ziehen des Ziegelsteinverlegearms (5) aufweist, um Ziegelsteine, die von dem Greifer (6) gegriffen werden, gegen ein oder mehr als eines der Elemente in einer Gruppe zu ziehen, die aufweist: verlegte Ziegelsteine in der Oberfläche, die mit Ziegelsteinen gepflastert werden soll; einen straßenseitigen Seitentreifen; einen Gehsteigbegrenzungstein.

## Revendications

1. Appareil de pose de briques configuré pour paver une route, allée ou surface similaire avec des briques, en ce qu'il comprend :
- un cadre déplaçable (3) présentant un entraînement de cadre pour le déplacement du cadre ;
- un bras de pose de briques (5) raccordé au cadre et présentant une pince (6) configurée pour venir en prise avec des briques, présentant un entraînement de bras pour déplacer le bras de pose de briques par rapport au cadre ;
- un capteur de positionnement (8) sur le cadre, configuré pour recevoir des signaux permettant la détermination d'une position de l'appareil ;
- un système de vision (7) sur le cadre configuré pour générer des images d'au moins une zone de surface partielle de la surface à paver avec des briques, au moins dans des limites établies en termes de, ou par rapport à la position de l'appareil ; et
- un système de commande (18) configuré pour commander l'entraînement de cadre pour déplacer le cadre et l'entraînement de bras pour déplacer le bras de pose de brique, sur la base d'une zone de surface par rapport à la position déterminée du cadre et sur les images générées,
**caractérisé par**
au moins un pied de levage (13) extensible sélectivement raccordé au cadre (3) via une table tournante (14), dans lequel le pied de levage (13) est configuré pour lever ou abaisser le cadre et pour faire tourner le cadre autour du pied de levage (13).

2. Appareil de pose de briques selon la revendication 1, dans lequel le pied de levage (13) comprend au moins deux parties de pieds complémentaires (15-17) dont chacune comprend un élément de pied (15) raccordé au travers d'une articulation (16) à une extrémité orientée vers le bas d'une jambe rétractable et extensible sélectivement (17).

3. Appareil de pose de briques selon la revendication 1 ou 2, dans lequel le capteur de positionnement (8) est au moins un parmi un capteur GPS ; un capteur de triangulation GSM ; un capteur de champ magnétique terrestre.

4. Appareil de pose de briques selon la revendication 1, 2 ou 3, dans lequel le système de vision comprend au moins une caméra (7) orientée vers au moins une portion de la zone de la surface.

5. Appareil de pose de briques selon l'une quelconque ou plusieurs revendications précédentes, dans lequel le cadre (3) est déplaçable sur une voie (4).

6. Appareil de pose de briques selon l'une quelconque ou plusieurs revendications précédentes, dans lequel le cadre est un cadre à portique (3) présentant un guidage aérien auquel le bras de pose de briques (5) avec l'entraînement de bras est suspendu.

7. Appareil de pose de briques selon l'une quelconque ou plusieurs revendications précédentes, dans lequel le cadre (3) comprend un logement (12) pour un support, tel qu'une palette (11), sur laquelle des couches de briques sont initialement agencées et prévues pour être mises en prise par le bras de pose de briques (5).

8. Appareil de pose de briques selon l'une quelconque ou plusieurs revendications précédentes, comprenant en outre un dispositif de traction (18, 5) raccordé au bras de pose de briques (5), pour tirer des briques mises en prise par la pince (6) contre l'un quelconque ou plusieurs d'un des éléments dans un groupe, comprenant : des briques posées dans la surface à paver avec des briques ; un accotement de route secondaire ; une pierre délimitant un trottoir ; et similaire.

9. Procédé de pavement d'une route, allée ou surface similaire avec une couche de briques, comprenant :
- le déplacement sélectif d'un cadre déplaçable (3) en utilisant un entraînement de cadre ;
- la pose sélective de briques dans ou sur la surface en utilisant un bras de pose de briques (5) raccordé au cadre déplaçable (3) en utilisant une pince (6) configurée pour venir en prise avec des briques et un entraînement de bras pour déplacer le bras de pose de briques par rapport au cadre,
- la détermination d'une position de l'appareil ;
- la génération d'images d'au moins une zone de surface partielle de la surface à paver avec des briques, au moins dans des limites établies en termes de, ou par rapport à la position de l'appareil ; et
- la commande de l'entraînement de cadre pour déplacer le cadre (3) et l'entraînement de cadre pour déplacer le bras de pose de briques (5), sur la base d'une zone de surface par rapport à la position déterminée du cadre (3) et sur les images générées,
**caractérisé par**
le levage du cadre (3) sur un pied extensible sélectivement (13), raccordé au cadre via une table tournante (14), la rotation du cadre (3) autour du pied (13) et l'abaissement du cadre (3) ensuite pour fournir un tour dans une voie de déplacement du cadre (3).

10. Procédé selon la revendication 9, dans lequel le pied de levage (13) comprend au moins deux parties de pieds complémentaires, dont chacune comprend un élément de pied raccordé au travers d'une articulation (16) à une extrémité orientée vers le bas d'une jambe rétractable et extensible sélectivement (17) et le procédé comprend en outre l'adaptation des parties de pieds à une surface dessous.

11. Procédé selon la revendication 9 ou 10, comprenant en outre le logement dans ou sur le cadre (3), d'un support, tel qu'une palette, sur laquelle des couches de briques sont initialement agencées et prévues pour être mises en prise par le bras de pose de briques.

12. Procédé selon la revendication 9, 10 ou 11 comprenant en outre la traction sélective du bras de pose de briques (5) pour tirer des briques mises en prise par la pince (6) contre l'un quelconque ou plusieurs d'un des éléments dans un groupe, comprenant : des briques posées dans la surface à paver avec des briques ; un accotement de route secondaire ; une pierre délimitant un trottoir.
